# EUROPEAN PATENT APPLICATION

(11) **EP 2 458 887 A1**
(43) Date of publication of application: **30.05.2012**
(21) Application number: 11186216.5
(22) Date of filing: 21.10.2011
(51) Int. Cl.: H04N 21/4402

(54) **Image processing apparatus and image processing method thereof**

(30) Priority: 30.11.2010 KR 20100120844
(71) Applicant: Samsung Electronics Co., Ltd., Suwon-si, Gyeonggi-do 442-742 (KR)
(72) Inventor: Yun, Na-rae, Gyeonggi-do (KR); Lee, Tae-hee, Gyeonggi-do (KR); Yoo, Young-taek, Gyeonggi-do (KR); Jeon, Hyoung-woo, Gyeonggi-do (KR); Oh, Sung-bo, Gyeonggi-do (KR)
(74) Representative: Brandon, Paul Laurence

(57) **Abstract**

An image processing method, includes: receiving streaming contents; extracting definition control information which includes content provider information and corresponds to the streaming contents; and controlling definition of the streaming contents by using the extracted definition control information.

## Description

### CROSS-REFERENCE TO RELATED APPLICATION

This application claims priority from Korean Patent Application No. 10-2010-0120844, filed November 30, 2010, in the Korean Intellectual Property Office, the disclosure of which is incorporated herein by reference in its entirety.

### BACKGROUND

### 1. Field

Apparatuses and methods consistent with exemplary embodiments relate to an image processing apparatus and an image processing method thereof adapted to process streaming contents.

### 2. Description of the Related Art

An optical disc which can record a large amount of data has been widely used as a recording medium. Particularly, as the demand for high definition image data or the high quality sound data increases, high definition television (HDTV) and MPEG2 have started to emerge. For example, in order to store an image data corresponding to an HD-quality movie on a disc, with the image quality of MPEG2, a new high definition recording medium which can store 20GByte or more data is required. Accordingly, a great deal of research has been carried out to achieve such a storage medium.

In compliance with such demand, blu-ray disc (BD) and high definition digital versatile disc (HD-DVD) have been developed as the next generation recording medium. In addition, there is a growing trend toward the development of reproduction apparatuses and optical recorders applied with the size of the high definition recording medium.

As the optical recorders and the reproduction apparatuses have been developed, a reproduction function of streaming data has been introduced. Here, the streaming data means transmitting multimedia contents under the broadcasting environment using a wire/wireless network instead of conventional storage media such as a compact disc (CD) or a hard disc drive (HDD) and forming reproducible data, simultaneously.

The streaming data varies in quality according to the receiving state of the radio wave or the network state of the broadcasting or wire/wireless internet.

Specifically, a company providing the streaming data service transmits data after changing the resolution size or lowering the bitrate according to the network speed. That is, as the image is outputted depending on the network speed, the image quality or definition may be deteriorated.

### SUMMARY

Exemplary embodiments may address at least the above problems and/or disadvantages and other disadvantages not described above. Also, exemplary embodiments are not required to overcome the disadvantages described above, and an exemplary embodiment may not overcome any of the problems described above.

Exemplary embodiments relate to an image processing apparatus and an image processing method thereof adapted to process streaming contents.

According to an aspect of an exemplary embodiment, there is provided an image processing method, the method including receiving streaming contents, extracting definition control information which includes content provider information and corresponds to the streaming contents, and controlling definition of the streaming contents by using the extracted definition control information.

The content provider information may include at least one among codec information of the streaming contents, and a noise processing method and a definition processing method of the streaming contents.

The definition control information may further include at least one information among bitrate, screen size, and noise degree of the received streaming contents.

The definition control information which corresponds to the streaming contents may be included in the streaming contents.

The definition control information which corresponds to the streaming contents may be pre-stored.

The content provider may be a video-on-demand (VOD) streaming content provider or a broadcaster.

The controlling definition of the streaming contents may control the definition of the streaming contents by applying a weight which corresponds to at least one information among the content provider information, the bitrate, the screen size, and the noise degree.

According to an aspect of an exemplary embodiment, there is provided an image processing apparatus, the apparatus including a data receiving and transmitting unit which receives streaming contents, an information processing unit which extracts definition control information that includes content provider information and corresponds to the streaming contents, an image processing unit which controls definition of the streaming contents, and a controller which controls the image processing unit to control the definition of the streaming contents by using the extracted definition control information.

The content provider information may include at least one among codec information of the streaming contents, and a noise processing method and a definition processing method of the streaming contents.

The definition control information may further include at least one information among bitrate, screen size, and noise degree of the received streaming contents.

The definition control information which corresponds to the streaming contents may be included in the streaming contents.

The image processing apparatus may further include a storage unit which stores the definition control information corresponding to the streaming contents, wherein the controller controls the image processing unit to control the definition of the streaming contents by using the definition control information stored in the storage unit.

The content provider may be a VOD streaming content provider or a broadcaster.

The controller may control the image processing unit to control the definition of the streaming contents by applying a weight which corresponds to at least one information among the content provider information, the bitrate, the screen size and the noise degree.

The low definition occurring due to degradation of resolution or bitrate is compensated, thereby enabling to provide an optimal definition.

### BRIEF DESCRIPTION OF THE DRAWINGS

The above and/or other aspects will become more apparent by describing certain exemplary embodiments with reference to the accompanying drawings, in which:

FIG. 1 depicts a service providing environment of a streaming format according to an exemplary embodiment;

FIG. 2 is a block diagram depicting a configuration of an image processing apparatus according to an exemplary embodiment;

FIG. 3 is a block diagram depicting a configuration of an image processing apparatus according to an exemplary embodiment;

FIG. 4 depicts an image processing method according to an exemplary embodiment;

FIGS. 5A to 5C depict various examples of content provider information according to an exemplary embodiment; and

FIG. 6 is a flowchart depicting an image processing method according to an exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of exemplary embodiments. Thus, exemplary embodiments can be carried out without those specifically defined matters. Also, well-known functions or constructions are not described in detail since they would obscure the invention with unnecessary detail.

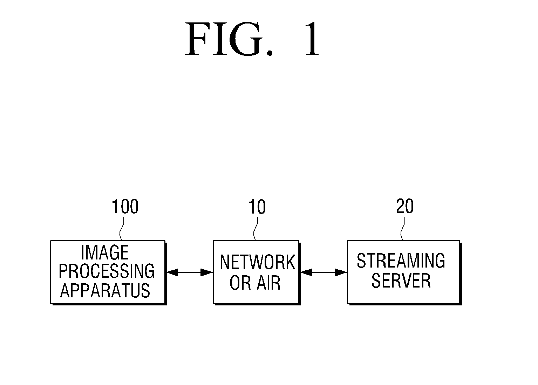

FIG. 1 depicts a service providing environment of a streaming format according to an exemplary embodiment.

With reference to FIG. 1, the streaming service may be performed in either two-way or one-way such as the broadcasting.

When the streaming service is provided through a network or a public airwave 10 environment, a streaming server 20 encodes the streaming contents to an appropriate format and packetizes the compressed bit stream to transmit the same to an image processing apparatus 100.

The image processing apparatus 100 may be embodied in a digital TV (DTV) or a high density optical disc player such as a BD player or a HD-DVD player.

The streaming server 20 may be a content provider which provides the VOD streaming contents, or a broadcaster which provides streaming data service.

The image processing apparatus 100 processes the packets in reverse of the process of the streaming server 20 to decode the streaming data. The satellite broadcasting such as personal mobile satellite broadcasting (PMSB), for example, can provide the audio data after processing the same to a packet data of the terabyte (TB) format such as a real-time transport protocol (RTP) packet in the AOD service.

Furthermore, the image processing appropriate 100 may perform the definition enhancement process by using the definition control information corresponding to the streaming contents. Here, the definition control information may be codec information, the content processing property of the content provider, bitrate, screen size or noise degree. Here, the codec means a technique of encoding and/or decoding a predetermined data stream or a signal. For instance, the codec technique may be H. 264, VC1, etc.

The content provider may be a VOD streaming content provider or a broadcaster, etc.

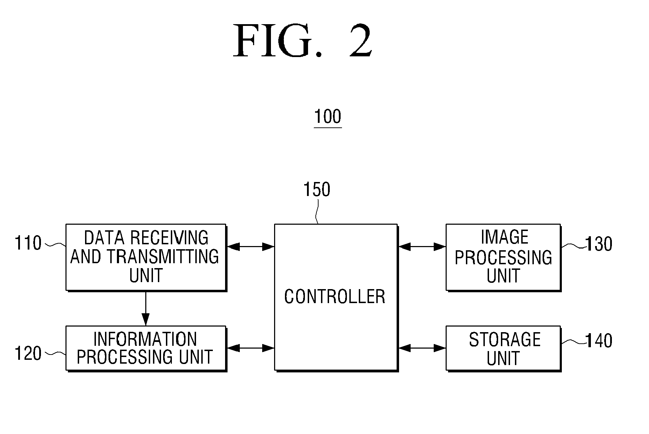

FIG. 2 is a block diagram depicting a configuration of an image processing apparatus according to an exemplary embodiment.

In FIG. 2, the image processing apparatus 100 includes a data receiving and transmitting unit 110, an information processing unit 120, an image processing unit 130, a storage unit 140, and a controller 150.

The image processing apparatus 100 receives multimedia data from a streaming content provider in a streaming format and may reproduce or broadcast the stream data at the same time as receiving the multimedia data. Such function is called a live streaming and may be a VOD service.

Thus, the image processing apparatus 100 may be embodied by in a setup box, a DTV which broadcasts the streaming data, or a content reproducing apparatus which reproduces the streaming data such as the VOD streaming data. Here, the content reproducing apparatus may be embodied in a tuner. Particularly, a high density optical disc player such as a BD player or an HD-DVD player may be the content reproducing apparatus.

The data receiving and transmitting unit 110 receives the streaming contents. Specifically, the data receiving and transmitting unit 110 may receive the streaming contents from a VOD streaming content provider or a broadcaster through networks or public airwaves.

The information processing unit 120 extracts the definition control information which includes the content provider information and corresponds to the received streaming contents. Here, the content provider information may include codec information of the streaming contents, and the content processing property of the content provider. Here, the content processing property may be a degree of processing noise in the content and a degree of processing the definition. For instance, even if the content provider receives the identical codec information, the content processing property may be different per each content provider.

The definition control information may further include at least one information kind of bitrate, screen size, and noise degree.

Here, the definition control information corresponding to the streaming contents may be included in the streaming contents or pre-stored in the storage unit 140.

The information processing unit 120 may extract at least one information kind of the bitrate, the screen size, and the noise degree from the received streaming contents.

The image processing unit 130 compensates the definition of the received streaming contents through the data receiving and transmitting unit 110.

The controller 150 may control the image processing unit 130 to control the definition of the streaming contents based on the definition control information extracted by the information processing unit 120. That is, the controller 150 may compensate the definition of the streaming contents by using at least one information kind among the content provider information (codec information and processing property), the bitrate, the screen size, and the noise degree extracted by the information processing unit 120.

The storage unit 140 may store various programs and data to control the functions of the image processing apparatus 100.

Particularly, the storage unit 140 may store the content provider information for each content provider.

The controller 150 may control the information processing unit 120 to extract the definition control information which corresponds to the received streaming contents, from the definition control information stored in the storage unit 140.

Furthermore, the controller 150 may control the image processing unit 130 to compensate the definition of the streaming contents by applying the weight corresponding to the definition control information including at least one information kind among content provider information, bitrate, screen size, and noise degree extracted by the information processing unit 120.

In an exemplary embodiment, the storage unit 140 is pre-stored with the definition control information corresponding to each content provider. However, in another embodiment, if the definition control information corresponding to each content provider of the received content streams is extracted to be used, the storage unit 140 does not store the relevant information.

Thus, if the definition control information is applied to the low definition (block noise, mosquito noise, definition deterioration, etc) which occurs due to degradation of resolution or of transmission bitrate, the low definition may be compensated to an optimal definition.

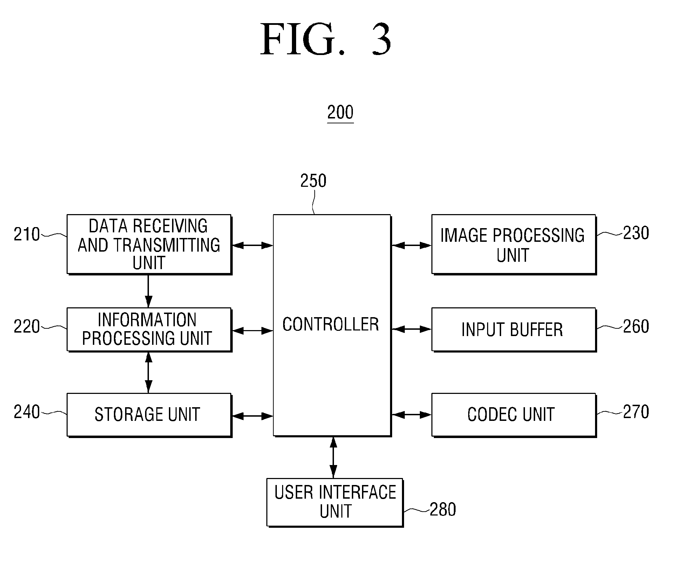

FIG. 3 is a block diagram depicting a configuration of an image processing apparatus according to an exemplary embodiment.

In FIG. 3, an image processing apparatus 200 includes a data receiving and transmitting unit 210, an information processing unit 220, an image processing unit 230, a storage unit 240, a controller 250, an input buffer 260, a codec unit 270, and a user interface unit 280. The detailed description of the same components of FIG. 3 as those of FIG. 2 are omitted.

The data receiving and transmitting unit 210 may receive the streaming contents from the streaming server 20.

The information processing unit 220 extracts the definition control information which includes the content provider information and corresponds to the received streaming contents.

Specifically, the information processing unit 220 extracts the content provider information which is included in the received streaming contents or extracts the content provider information corresponding to the received streaming contents from the storage unit 240.

The storage unit 240 stores control programs which control the overall functions of the image processing apparatus 200. Specifically, the storage unit 240 may store: main programs of reproducing high density optical disc, content exploration, and content recording; programs of providing the viewers with images by performing decoding and encoding in regard to compressed the audio and video data in various manners; and other supplemental programs.

Furthermore, the storage unit 240 may store the content provider information corresponding to each content provider. Specifically, the storage unit 240 may store information of the content processing property per each content provider and the codec information corresponding to the above information. For example, the property information per each VOD streaming content provider such as Netflix, Blockbuster, Vudu etc. and the codec information corresponding to the above information may be stored in the storage unit 240. For example, the storage unit 240 may store the property per each content provider such as the information of Blockbuster and Vudu which use H. 264 Codec and the information of Blockbuster which applies a stronger filtering to the NR Filter than to Vudu.

When the streaming packet is transmitted from the data receiving and transmitting unit 210, the image processing unit 230 analyzes the header of the transmitted stream packet, separates the packet into an audio packet and a video packet, and records the same in the input buffer 260. Here, the audio packet and the video packet consisting of data which again consists of a frame unit are provided by a plurality of frames.

Furthermore, the image processing unit 230 may perform the definition enhancement process for the received stream packet.

The codec unit 270 may decode the stream packets which are recorded in the input buffer 260 per each frame. The packets decoded in the codec unit 270 may be reproduced by a reproduction unit (not shown).

The user interface unit 280 may receive the user's order through a remote controller, for example, and transmit the received user's order to the controller 250.

The controller 250 may control the functions of the image processing apparatus 200 according to the user's order transmitted through the user interface unit 280.

Particularly, the controller 250 may control the image processing unit 230 to perform the definition enhancement process based on the definition control information which corresponds to the streaming contents and is extracted by the information processing unit 220.

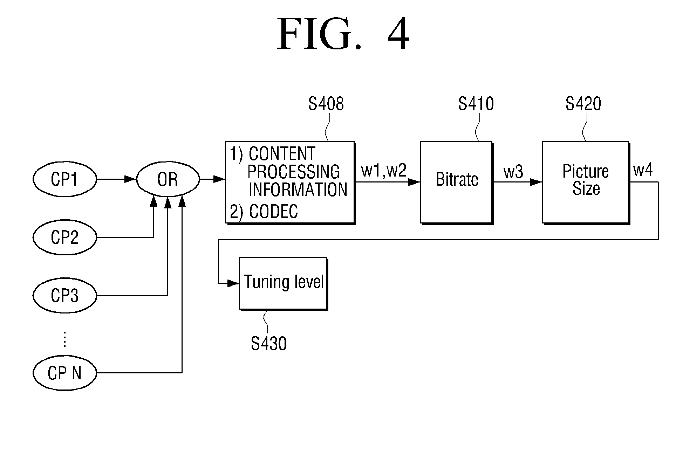

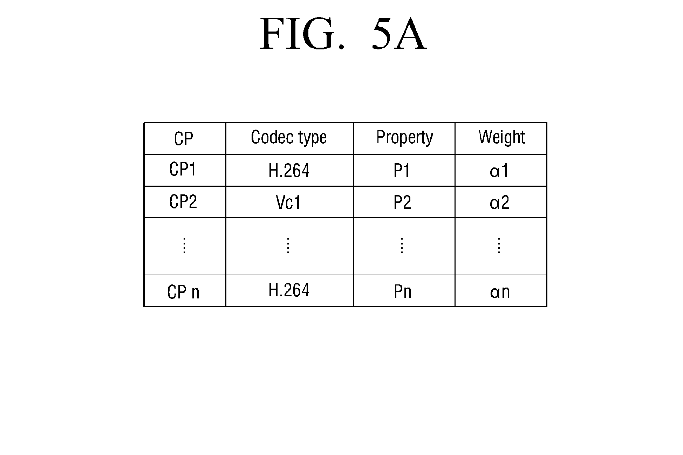

That is, the controller 250 controls the image processing unit 230 to compensate the definition of the streaming contents by applying the weight corresponding to the definition control information including at least one information among content provider information, bitrate, screen size and noise degree extracted by the information processing unit 220. Here, the method of applying the weight per each information kind is described below with reference to FIGS. 4 and 5A to 5C.

The image processing apparatus 200 may further include a pick-up unit (not shown) which detects a recording signal from the recording side of the inserted optical disc, and a codec updating unit (not shown) to update the codec.

FIG. 4 depicts an image processing method according to an exemplary embodiment.

In FIG. 4, when the streaming contents are received from one of a plurality of content providers (CP1, CP2, CP3, ...), content provider (CP) information which includes at least codec information and a content processing information of the received streaming contents are extracted (operation S408). Here, the codec information may be pre-stored for each content provider. Otherwise, the codec information may be included in the received streaming contents.

For example, the content processing information may include a content processing method and/or a noise processing method information for each content provider. For example, a first content provider CP1 may apply a strong filtering to the NR filter, and a second content provider CP2 may apply a weak filtering to the NR filter compared to the first content provider CP1. Such information may become the content processing information.

The codec information may be a codec information which corresponds to each content provider. For example, the codec information corresponding to the first content provider CP1 may be H.264 and the codec information corresponding to the second content provider CP2 may be VC1.

The weight α corresponding to the relevant information may be applied by extracting the content processing information (w1) and codec information (w2) corresponding to the received streaming content, from the storage unit or the received streaming contents. Here, the weight α may be appropriately selected according to the content processing information (w1) and the codec information (w2).

Next, bitrate information which corresponds to the received streaming contents may be extracted (operation S410). The bitrate information may be included in the received streaming contents. Otherwise, the bitrate information may be pre-stored in the storage unit for each content provider.

The weight (β) corresponding to the relevant information may be applied by extracting bitrate information (w3) corresponding to the received streaming contents, from the storage unit or the received streaming contents.

Next, picture size information of the received streaming contents may be extracted (operation S420). The picture size information may be included in the received streaming contents. Otherwise, the picture size information may be pre-stored in the storage unit for each content provider.

The weight (γ) corresponding to the relevant information may be applied by extracting picture size information (w4) corresponding to the received streaming contents, from the storage unit or the received streaming contents.

Thus, the degree of tuning of the received streaming content may be determined (operation S430) by applying the weight which corresponds to each definition control information:

A = α (w1+w2) + βw3 + γw4,

where w1 represents the content processing information,

w2 represents the codec information,

w3 represents bitrate information, and

w4 represents picture size information.

In an exemplary embodiment, content processing information, codec information, bitrate information, and picture size information are applied in the order thereof to control the definition, however, such order is not limited hereto.

FIGS. 5A to 5C depict various examples of content provider information according an exemplary embodiment.

In FIG. 5A, each content provider (CP1, CP2, ..., CPₙ) may compress data into each corresponding codec format for transmission thereof and may obtain a corresponding content processing property. Such information may be included in the streaming content for transmission thereof or may be pre-stored in the image processing apparatuses 100, 200. Here, the codec format is established per each content provider and may be different from or identical to each other.

Furthermore, the weight (α1, α2, and α3) corresponding to the content provider information (codec type and property) may be applied for the definition control. In an exemplary embodiment, an identical weight is applied to the codec type and property included in the content provider information, however, different weights may be established according to the codec type and property.

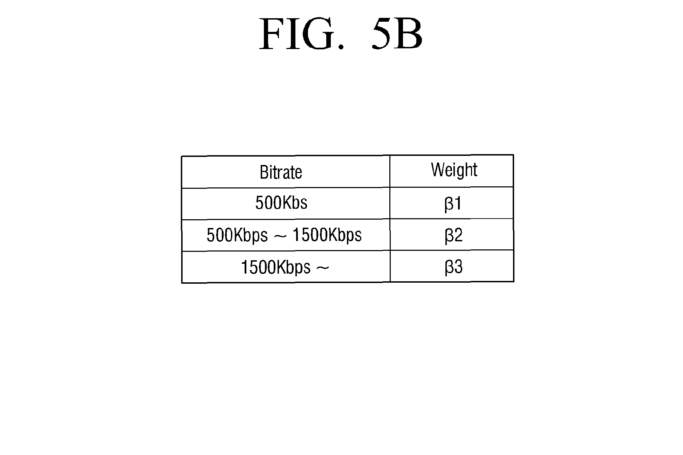

In FIG. 5B, the bitrate of each streaming content is classified into a plurality of groups to be used as the definition enhancement process. For example, the bitrate may be classified into 3 grades of 500kbps or less, 500kbps-1500kbps, and 1500kbps or more. The weight (β1, β2, and β3) corresponding to each bitrate grade is applied for the definition control.

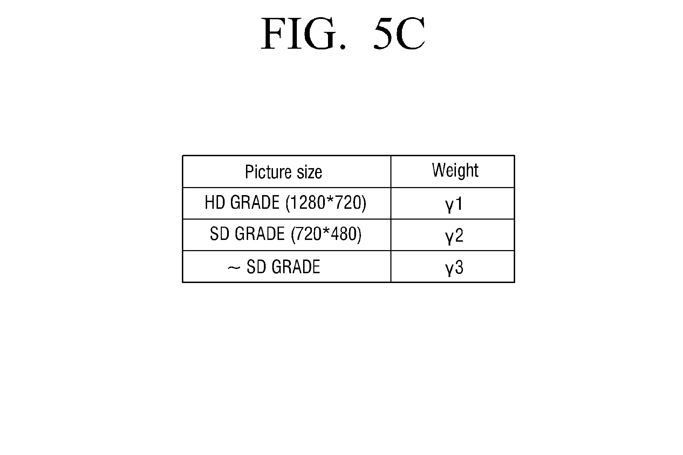

In FIG. 5C, the screen size of each streaming content is classified into a plurality of groups to be used as the definition enhancement process. For example, the screen size may be classified into 3 grades of HD grade (1280*720), SD grade (720*480), and SD grade or less. The weight (γ1, γ2, and γ3) corresponding to each grade of the screen size is applied for the definition control.

As described above, the bitrate and the screen size are classified into 3 grades, each respectively, and the weight which corresponds to each grade is applied. However, the grades according to the bitrate and the screen size may be described in various ways.

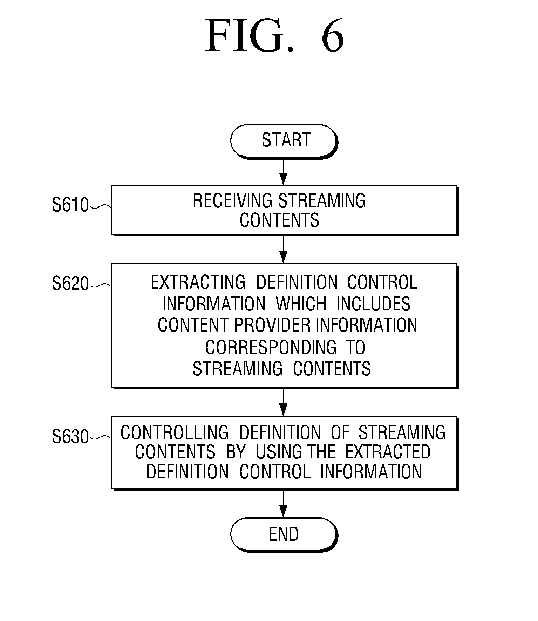

FIG. 6 is a flowchart depicting an image processing method according to an exemplary embodiment.

In FIG. 6, if streaming contents are received in operation S610, definition control information which includes content provider information and corresponds to the received streaming contents is extracted in operation S620.

Next, definition of the streaming contents is controlled by using the extracted definition control information in operation S630. Here, the content provider information may include at least one among codec information of the streaming contents, and a noise processing method and a definition processing method of the streaming contents. The definition control information may further include at least one information kind among the bitrate, the screen size, and the noise degree of the received streaming contents.

In this case, the definition control information corresponding to the streaming contents may be included in the streaming contents. Otherwise, the definition control information corresponding to the streaming contents may be pre-stored.

The content provider may be a VOD streaming content provider or a broadcaster.

In this case, the definition of the streaming contents may be controlled by applying the weight which corresponds to at least one information kind among the aforesaid definition control information.

As apparent from the foregoing, in an exemplary embodiment, the low definition occurring due to degradation of resolution or bitrate is compensated, thereby enabling to provide an optimal definition.

The foregoing exemplary embodiments and advantages are merely exemplary and are not to be construed as limiting the exemplary embodiment. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An image processing method, comprising:
receiving streaming contents;
extracting definition control information which includes content provider information and corresponds to the streaming contents; and
controlling definition of the streaming contents by using the extracted definition control information,
wherein at least one of the receiving the streaming contents, the extracting the definition control information, and the controlling the definition is performed by a hardware device.

2. The method as claimed in claim 1, wherein the content provider information comprises at least one of codec information of the streaming contents, and a noise processing method and a definition processing method of the streaming contents.

3. The method as claimed in claim 1 or 2, wherein the definition control information comprises at least one of bitrate, screen size, and noise degree of the received streaming contents.

4. The method as claimed in anyone of claims 1 to 3, wherein the definition control information which corresponds to the streaming contents is included in the streaming contents.

5. The method as claimed in anyone of claims 1 to 4, further
comprising:
pre-storing the definition control information which corresponds to the streaming contents.

6. The method as claimed in anyone of claims 1 to 5, wherein a content provider is a video-on-demand (VOD) streaming content provider or a broadcaster.

7. The method as claimed in claim 3, wherein the controlling the definition of the streaming contents comprises applying a weight which corresponds to at least one of the content provider information, the bitrate, the screen size, and the noise degree.

8. An image processing apparatus, comprising:
a data receiving and transmitting unit which receives streaming contents;
an information processing unit which extracts definition control information that includes content provider information and corresponds to the streaming contents;
an image processing unit which controls definition of the streaming contents;
and
a controller which controls the image processing unit to control the definition of the streaming contents by using the extracted definition control information.

9. The apparatus as claimed in claim 8, wherein the content provider information includes at least one of codec information of the streaming contents, and a noise processing method and a definition processing method of the streaming contents.

10. The apparatus as claimed in claim 8 or 9, wherein the definition control information includes at least one of bitrate, screen size, and noise degree of the received streaming contents.

11. The apparatus as claimed in anyone of claims 8 to 10, wherein the definition control information which corresponds to the streaming contents is included in the streaming contents.

12. The apparatus as claimed in anyone of claims 8 to 11, further comprising:
a storage unit which stores the definition control information corresponding to the streaming contents,
wherein the controller controls the image processing unit to control the definition of the streaming contents by using the definition control information stored in the storage unit.

13. The apparatus as claimed in anyone of claims 8 to 12, wherein a content provider is a video-on-demand (VOD) streaming content provider or a broadcaster.

14. The apparatus as claimed in claim 10, wherein the controller controls the image processing unit to control the definition of the streaming contents by applying a weight which corresponds to at least one of the content provider information, the bitrate, the screen size, and the noise degree.
